# EUROPÄISCHE PATENTSCHRIFT

(11) **EP 1 268 273 B1**
(45) Veröffentlichungstag und Bekanntmachung des Hinweises auf die Patenterteilung: **07.01.2004**
(21) Anmeldenummer: 01929296.0
(22) Anmeldetag: 03.04.2001
(51) Int. Cl.: B64C 27/615, H01L 41/09

(54) **PIEZOELEKTRISCHE BETÄTIGUNGSEINRICHTUNG ZUR KLAPPENSTEUERUNG AM ROTORBLATT EINES HUBSCHRAUBERS**
PIEZOELECTRIC ACTUATING DEVICE FOR CONTROLLING THE FLAPS ON THE ROTOR BLADE OF A HELICOPTER
DISPOSITIF D'ACTIONNEMENT PIEZO-ELECTRIQUE SERVANT A COMMANDER LES VOLETS AU NIVEAU D'UNE AILETTE DE ROTOR D'UN HELICOPTERE

(30) Priorität: 07.04.2000 DE 10017332
(43) Veröffentlichungstag der Anmeldung: 02.01.2003
(73) Patentinhaber: EADS Deutschland GmbH, 85521 Ottobrunn (DE)
(72) Erfinder: HERMLE, Frank, 81673 München (DE); JÄNKER, Peter, 85748 Garching (DE)
(86) Internationale Anmeldenummer: PCT/DE2001/001251
(87) Internationale Veröffentlichungsnummer: WO 2001/076940

(56) Entgegenhaltungen:
- EP-A- 0 947 422
- US-A- 4 808 874
- US-A- 4 952 835
- US-A- 5 907 211

## Beschreibung

Die Erfindung betrifft eine piezoelektrische Betätigungseinrichtung zur Klappensteuerung am Rotorblatt eines Hubschraubers mit einer mindestens einen piezoelektrischen Stapelaktuator enthaltenden Piezoelementanordnung und einem mit der Piezoelementanordnung gekoppelten Kraftübersetzungsrahmen, der an einem Rotorblatt befestigbar ist und aus einer Längenänderung der Piezoelementanordnung bei deren Erregung zwischen einem Widerlager und einem Abtriebselement, die an dem Kraftübersetzungsrahmen vorgesehen sind, eine quer zur Fliehkraftrichtung des Rotorblatts wirkende Kraft erzeugt, wobei eine erste Halterung vorgesehen ist, über die der Kraftübersetzungsrahmen in Fliehkraftrichtung an dem Rotorblatt fixierbar ist, jedoch quer zur Fliehkraftrichtung nachgiebig ist und über einen begrenzten Bereich eine Bewegung des Kraftübersetzungsrahmens quer zur Fliehkraftrichtung relativ zu dem Rotorblatt gestattet, sowie eine zweite Halterung vorgesehen ist, die das an dem Kraftübersetzungsrahmen vorgesehene Widerlager quer zur Fliehkraftrichtung relativ zu dem Rotorblatt festlegt, jedoch in . Fliehkraftrichtung nachgiebig ist und über einen begrenzten Bereich eine Bewegung des Widerlagers in Fliehkraftrichtung relativ zu dem Rotorblatt gestattet.

Piezoelektrische Betätigungseinrichtungen finden in einer Vielzahl von Anwendungsbereichen zunehmend Verwendung, wobei sie aufgrund ihrer geringen Baugröße und ihrer hohen Leistungsdichte insbesondere in der Luft- und Raumfahrt mit Vorteil einsetzbar sind. Für die Klappensteuerung an den Rotorblättern von Hubschraubern sind piezoelektrische Betätigungseinrichtungen aufgrund ihrer hohen Leistungsdichte besonders geeignet. Ein Problem hierbei ist es jedoch, daß eine sichere Abstützung und Entkopplung der piezoelektrischen Betätigungseinrichtung gegen die am Rotorblatt auftretende Fliehkraft (bis zu 1000 g) gewährleistet sein muß.

Aus der DE 196 46 676 C1 oder der DE 196 48 545 A1 sind piezoelektrische Stapelaktuatoren in Form von übereinandergeschichteten piezoelektrischen Einzelelementen bekannt, wie sie in einer in der piezoelektrischen Betätigungseinrichtung enthaltenen Piezoelementanordnung zum Antrieb derselben vorgesehen sein können.

Ferner sind aus US 4,808,874 und US 4,952,835 piezoelektrisch angetriebene Verstärkungsmechanismen bekannt, die ohne Verwendung von Hebeln oder Motoren eine Hubbewegung verstärken.

Des Weiteren ist aus US 5,907,211 ein piezoelektrischer Aktuator beschrieben, der eine X-förmige Anordnung aufweist und durch zwei Piezoelemente betätigt wird. Der Aktuator ist innerhalb eines Gehäuses angeordnet, wobei der Abtrieb über eine entsprechende Verschiebungsplatte erfolgt. Femer ist der Aktuator mittels einstückig ausgebildeter, flexibler Halterungen an dem Gehäuse befestigt. Der Aktuator wird beispielsweise zur Steuerung einer Servoklappe eines Hubschrauberrotorblattes verwendet.

Die Aufgabe der Erfindung ist es, eine piezoelektrische Betätigungseinrichtung zur Klappensteuerung am Rotorblatt eines Hubschraubers zu schaffen, die ein hohes Maß an Funktionsfähigkeit und Betriebssicherheit zeigt, und dabei insbesondere die Gefahr einer Beschädigung des piezoelektrischen Elementes deutlich verringert.

Diese Aufgabe wird gemäß der Erfindung durch eine piezoelektrische Betätigungseinrichtung mit den Merkmalen des Anspruchs 1 gelöst.

Vorteilhafte Ausgestaltungen der erfindungsgemäßen Betätigungseinrichtung sind in den Unteransprüchen gekennzeichnet.

Durch die Erfindung wird eine piezoelektrische Betätigungseinrichtung zur Klappensteuerung am Rotorblatt eines Hubschraubers mit einer mindestens einen piezoelektrischen Stapelaktuator enthaltenden Piezoelementanordnung und einem mit der Piezoelementanordnung gekoppelten Kraftübersetzungsrahmen, der an dem Rotorblatt befestigbar ist und aus einer Längenänderung der Piezoelementanordnung bei deren Erregung zwischen einem Widerlager und einem Abtriebselement, die an dem Kraftübersetzungsrahmen vorgesehen sind, eine quer zur Fliehkraftrichtung des Rotorblatts wirkende Kraft erzeugt, wobei eine erste Halterung vorgesehen ist, über die der Kraftübersetzungsrahmen in Fliehkraftrichtung an dem Rotorblatt fixierbar ist, jedoch quer zur Fliehkraftrichtung nachgiebig ist und über einen begrenzten Bereich eine Bewegung des Kraftübersetzungsrahmens quer zur Fliehkraftrichtung relativ zu dem Rotorblatt gestattet, sowie eine zweite Halterung vorgesehen ist, die das an dem Kraftübersetzungsrahmen vorgesehen Widerlager quer zur Fliehkraftrichtung relativ zu dem Rotorblatt festlegt, jedoch in Fliehkraftrichtung nachgiebig ist und über einen begrenzten Bereich eine Bewegung des Widerlagers in Fliehkraftrichtung relativ zu dem Rotorblatt gestattet. Erfindungsgemäß enthält die erste Halterung zwei Anordnungen von ersten biegeweichen Bändern, die sich im Wesentlichen parallel zueinander in Fliehkraftrichtung erstrecken, und die zweite Halterung enthält zwei Anordnungen von zweiten biegeweichen Bändern, die sich im Wesentlichen parallel zueinander quer zur Fliehkraftrichtung erstrecken, so dass die biegeweichen Bänder der ersten Halterung sowie der zweiten Halterung parallelogrammförmig bewegbar sind.

Ein wesentlicher Vorteil der piezoelektrischen Betätigungseinrichtung ist es, daß diese zuverlässig und sicher gegen die am Rotorblatt eines Hubschraubers auftretende hohe Fliehkraft fixiert ist, ohne daß dadurch die Funktionsfähigkeit der Betätigungseinrichtung beeinträchtigt wäre.

Vorteilhafterweise umfaßt die erste Halterung sich longitudinal in Fliehkraftrichtung erstreckende, an einem Ende am Rotorblatt und am anderen Ende am Kraftübersetzungsrahmen der Betätigungseinrichtung befestigte erste Halteelemente. Diese gewährleisten eine zuverlässige Halterung des Kraftübersetzungsrahmens gegen die Fliehkraft, wobei gleichzeitig eine uneingeschränkte Bewegung von Abtriebselement und Widerlager in der dafür vorgesehenen Weise möglich ist.

Vorzugsweise sind die ersten Halteelemente durch quer zur Fliehkraftrichtung des Rotorblatts biegeweiche Bänder gebildet. Solche gestatten eine uneingeschränkte Bewegung des Kraftübersetzungsrahmens der Betätigungseinrichtung quer zur Fliehkraftrichtung, wobei der Kraftübersetzungsrahmen gleichzeitig in Richtung der Fliehkraft zuverlässig festgelegt ist. Weiterhin ist durch die Verwendung von solchen, biegeweichen Bändern eine Fixierung des Kraftübersetzungsrahmens auch in der dritten Richtung, also senkrecht zu der durch die Fliehkraftrichtung und die vorgesehene Bewegungsrichtung von Widerlager und Abtriebselement aufgespannten Ebene möglich.

Vorzugsweise enthält die erste Halterung zwei Anordnungen von ersten biegeweichen Bändern, die sich im wesentlichen parallel zueinander in Fliehkraftrichtung erstrecken. Dies gestattet eine quasi parallelogrammförmige Bewegung der biegeweichen Bänder bezüglich des Kraftübersetzungsrahmens und bezüglich einer am Rotorblatt vorgesehenen Fliehkraftbefestigung, an welcher die ersten Halteelemente fixiert sind. Im einfachsten und bevorzugten Fall wird jede der beiden Anordnungen von ersten biegeweichen Bändern jeweils nur ein derartiges Band enthalten, so daß der Kraftübersetzungsrahmen durch zwei parallel zueinander in Fliehkraftrichtung verlaufende erste Bänder gehalten wird.

Vorteilhafterweise sind die ersten Halteelemente kraftübersetzungsrahmenseitig am Widerlager oder in der Nähe desselben bzw. am Abtriebselement oder in der Nähe desselben befestigt.

Gemäß einer vorteilhaften Ausgestaltung der erfindungsgemäßen piezoelektrischen Betätigungseinrichtung umfaßt die zweite Halterung sich quer zur Fliehkraftrichtung erstreckende zweite Halteelemente, die an einem Ende mit dem Widerlager und am anderen Ende mit einem zur Befestigung am Rotorblatt dienenden Befestigungselement verbunden sind. Dies gestattet eine definierte Verschiebung des Kraftübersetzungsrahmens der Betätigungseinrichtung in Fliehkraftrichtung, so daß der Kraftübersetzungsrahmen hinsichtlich der Bewegung von Abtriebselement und Widerlager relativ zueinander weitestgehend von der Fliehkraft entkoppelt ist.

Vorzugsweise sind auch die zweiten Halteelemente durch biegeweiche Bänder gebildet, die hier jedoch in Fliehkraftrichtung des Rotorblatts biegeweich angeordnet sind. Dies ermöglicht eine Beweglichkeit zwischen dem Befestigungselement und dem Widerlager in der vorgesehenen Richtung in Fliehkraftrichtung, wobei der Kraftübersetzungsrahmen andererseits in Richtung senkrecht zu der durch die Fliehkraftrichtung und die Arbeitsrichtung zwischen Widerlager und Abtriebselement aufgespannten Ebene fixiert ist.

Vorzugsweise enthält die zweite Halterung zwei Anordnungen von zweiten biegeweichen Bändern, die sich im wesentlichen parallel zueinander quer zur Fliehkraftrichtung erstrecken. Dies gestattet wiederum eine parallelogrammförmige Bewegung zwischen dem Befestigungselement und dem Widerlager, wobei im einfachsten und bevorzugten Fall jede der beiden Anordnungen von zweiten biegeweichen Bändern jeweils nur ein derartiges Band enthält, so daß die zweite Halterung aus zwei, im wesentlichen parallel zueinander quer zur Fliehkraftrichtung verlaufende biegeweiche Bänder gebildet ist.

Vorzugsweise enthält die Piezoelementanordnung der Betätigungseinrichtung mindestens einen in seiner Arbeitsrichtung längsausgedehnten piezoelektrischen Stapelaktuator, und der Kraftübersetzungsrahmen umfaßt mit den jeweiligen Enden der Piezoelementanordnung gekoppelte Arbeitsjoche und diese miteinander verbindende, sich ungefähr parallel zur Längsrichtung der Piezoetementanordnung erstreckende und in einem Mittelbereich zwischen den Arbeitsjochen Abtriebsbereiche in Form des Widerlagers und des Abtriebselements aufweisende Abtriebsschenkel, wobei die Abtriebsschenkel zusammen mit den Arbeitsjochen eine im Sinne einer Verschiebung der Abtriebsbereiche relativ zueinander in Richtung senkrecht zur Längsrichtung der Piezoelementanordnung flexible Anordnung bilden, durch welche ein Ausdehnen und Zusammenziehen der Piezoelementanordnung in ihrer Längsrichtung in eine Bewegung von Widerlager und Abtriebselement relativ zueinander in Richtung senkrecht zur Längsrichtung der Piezoelementanordnung umgesetzt wird.

Die vorgenannte Ausführungsform ist vorzugsweise so ausgebildet, daß die Piezoelementanordnung mit ihren Enden jeweils mittig mit dem Zentrum eines jeden Arbeitsjochs gekoppelt ist, und daß an jedem Arbeitsjoch paarweise bezüglich des Zentrums des jeweiligen Arbeitsjochs einander gegenüberliegende Abtriebsschenkel vorgesehen sind, die jeweils an einem Ende flexibel mit jeder Seite eines Arbeitsjochs verbunden sind und am anderen Ende zu den im Mittelbereich befindlichen Abtriebsbereichen in Form von Widerlager bzw. Abtriebselement verlaufen.

Gemäß einer Ausgestaltung der erfindungsgemäßen piezoelektrischen Betätigungseinrichtung sind die Abtriebsschenkel durch in sich starre Einzelschenkel gebildet, die im Mittelbereich und an den den Arbeitsjochen zugeordneten Ende gelenkig verbunden sind.

Gemäß einer bevorzugten Weiterbildung hiervon sind zwischen jeder Seite eines Arbeitsjochs und einem Abtriebsbereich in Form von Widerlager bzw. Abtriebselement jeweils zwei parallel, voneinander beabstandet angeordnete Abtriebsschenkel vorgesehen, die bei Bewegung von Widerlager und Abtriebselement eine parallelogrammartige Bewegung ausführen. Der besondere Vorteil hiervon ist eine erhöhte Festigkeit des Kraftübersetzungsrahmens gegen die hohen auftretenden Fliehkräfte.

Vorzugsweise sind die ersten Halteelemente an ihrem zur Befestigung am Rotorblatt vorgesehenen Ende mit einstückig mit den ersten Halteelementen ausgebildeten Befestigungsösen versehen.

Gemäß einer besonders vorteilhaften Ausführungsform der piezoelektrischen Betätigungseinrichtung ist es vorgesehen, daß der die Arbeitsjoche, die Abtriebsschenkel und die Abtriebsbereiche in Form von Widerlager und Abtriebselement umfassende Kraftübersetzungsrahmen einstückig zusammen mit den ersten Halteelementen und den zweiten Halteelementen einschließlich der zur Befestigung am Rotorblatt dienenden Befestigungselemente hergestellt ist. Der Vorteil hiervon ist eine kostengünstige Herstellbarkeit einer in hohem Maße zuverlässigen und betriebssicheren piezoelektrischen Betätigungseinrichtung nach der Erfindung.

Gemäß einer alternativen Ausführungsform können die Abtriebsschenkel anstelle in Form von in sich starren Einzelschenkeln durch ein dünnes, flexibles Bandmaterial gebildet sein, das in Richtung seiner Dicke eine geringe Biegesteifigkeit und in Querrichtung eine hohe Steifigkeit aufweist.

Im folgenden wird ein Ausführungsbeispiel der Erfindung anhand der Zeichnung erläutert.

Es zeigen:
- Figur 1: eine Seitenansicht einer piezoelektrischen Betätigungseinrichtung nach einem Ausführungsbeispiel der Erfindung; und
- Figur 2: eine perspektivische Darstellung der in Figur 1 gezeigten piezoelektrischen Betätigungseinrichtung nach dem Ausführungsbeispiel der Erfindung.

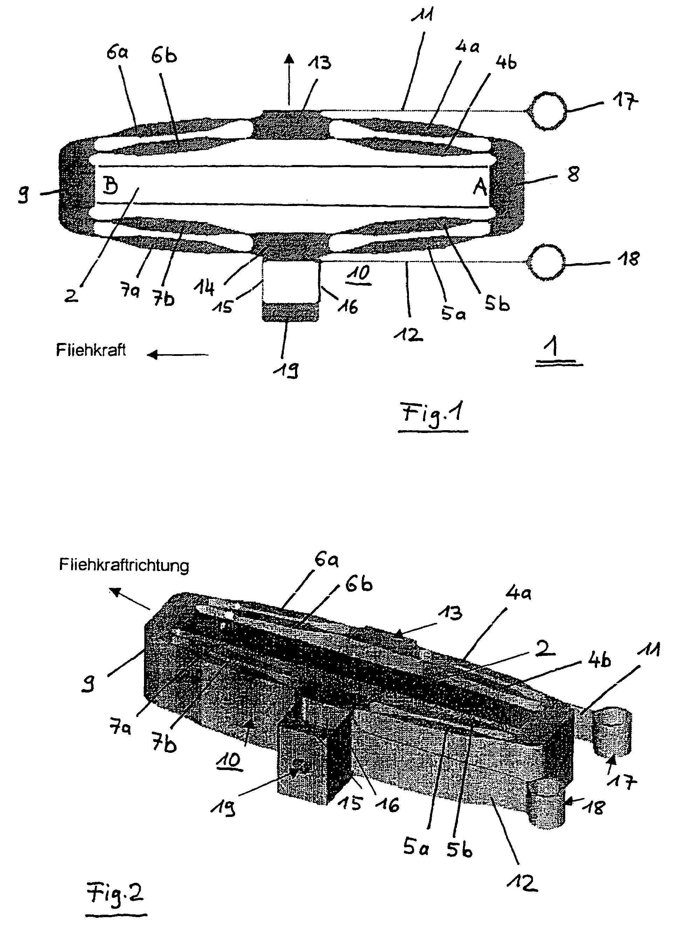

Die in Figur 1 in der Seitenansicht und in Figur 2 in perspektivischer Ansicht gezeigte piezoelektrische Betätigungseinrichtung, die insgesamt mit dem Bezugszeichen 1 versehen ist, besteht im wesentlichen aus einem piezoelektrischen Stapelaktuator 2 und einem Kraftübersetzungsrahmen, der insgesamt mit dem Bezugszeichen 10 versehen ist. Der piezoelektrische Stapelaktuator 2 ist ein längenausdehnendes Gebilde und aus einer Vielzahl von piezoelektrischen Einzelelementen gebildet, die übereinander schichtweise angeordnet sind, wie es an sich bekannt ist. Der Kraftübersetzungsrahmen 10 besteht aus zwei Arbeitsjochen 8,9, die mit jeweiligen Enden A und B des Stapelaktuators 2 gekoppelt sind, sowie einer Anzahl von Abtriebsschenkeln 4a,b, 5a,b, 6a,b und 7a,b, einem Abtriebselement 13 und einem Widerlager 14. Die Piezoelementanordnung 2 ist mit ihren Enden A,B jeweils mittig mit dem Zentrum eines jeden Arbeitsjochs 8,9 gekoppelt, wobei die Arbeitsjoche 8,9 breiter sind als die Piezoelementanordnung 2 und auf beiden Seiten über die Piezoelementanordnung 2 hinausstehen. An beiden Seiten eines jeden Arbeitsjochs 8,9 sind jeweils paarweise die Abtriebsschenkel 4a,b, 5a,b bzw. 6a,b und 7a,b mit den einen Enden befestigt, wobei die anderen Enden derselben mit dem Abtriebselement 13 bzw. mit dem Widerlager 14 verbunden sind, nämlich die Enden der Abtriebsschenkel 4a,b und 6a,b mit dem Abtriebselement 13 und die Enden der Abtriebsschenkel 5a,b und 7a,b mit dem Widerlager 14. Der Kraftübersetzungsrahmen 10 erzeugt aus einer Längenänderung der Piezoelementanordnung 2 bei deren Erregung zwischen dem Widerlager 14 und dem Abtriebselement 13 eine quer zur Längsausdehnung der Piezoelementanordnung wirkende Kraft, wie sie durch den Pfeil am Abtriebselement 13 gezeigt ist. Bei einer Längsausdehnung der Piezoelementanordnung 2 werden das Abtriebselement 13 und das Widerlager 14 relativ zueinander quer zur Längsausdehnung der Piezoelementanordnung 2 aufeinander zubewegt. Eine Kontraktion der Piezoelementanordnung 2 kehrt die beschriebene Bewegung um.

An dem Kraftübersetzungsrahmen 10, nämlich an dem Abtriebselement 13 und an dem Widerlager 14 sind sich longitudinal erstreckende erste Halteelemente 11,12 in Form von biegeweichen Bändern angeordnet, welche an ihren Enden mit Befestigungsösen 17 und 18 versehen sind. Mit Hilfe dieser ersten Halteelemente 11,12 wird die piezoelektrische Betätigungseinrichtung am Rotorblatt eines Hubschraubers befestigt, zur Steuerung von dessen Klappen es vorgesehen ist. Die Befestigung erfolgt so, daß die ersten Halteelemente 11,12 sich mit ihrer Longitudinalrichtung parallel zur Fliehkraftrichtung des Rotorblatts erstrecken. Durch die ersten Halteelemente 11,12 erfolgt somit eine erste Halterung, die den Kraftübersetzungsrahmen 10 in Fliehkraftrichtung an dem Rotorblatt fixiert, jedoch quer zur Fliehkraftrichtung nachgiebig ist und über einen begrenzten Bereich eine Bewegung des Kraftübersetzungsrahmens 10 quer zur Fliehkraftrichtung relativ zu dem Rotorblatt gestattet (die Fliehkraftrichtung ist in den Figuren 1 und 2 durch Pfeile dargestellt).

Weiterhin sind zweite Halteelemente 15,16 in Form von weiteren biegeweichen Bändern vorgesehen, die an einem Ende mit dem Widerlager 14 und am anderen Ende mit einem zur Befestigung am Rotorblatt dienenden Befestigungselement 19 verbunden sind. Die zweiten biegeweichen Bänder 15,16 erstrecken sich im wesentlichen parallel zueinander quer zur Fliehkraftrichtung des Rotors und fixieren den Kraftübersetzungsrahmen 10 quer zur Fliehkraftrichtung relativ zum Rotorblatt, sind jedoch in Fliehkraftrichtung nachgiebig und gestatten über einen begrenzten Bereich eine Bewegung des Widerlagers 14 in Fliehkraftrichtung relativ zu dem Rotorblatt.

Die Abtriebsschenkel 4a,b, 5a,b, 6a,b, 7a,b sind durch in sich starre Einzelschenkel gebildet, die im Mittelbereich, nämlich am Abtriebselement 13 und am Widerlager 14, und an den Arbeitsjochen 8,9 gelenkig mit den genannten Elementen verbunden sind. Zwischen jeder Seite eines Arbeitsjochs, 8,9 und dem Widerlager 14 bzw. dem Abtriebselement 13 sind jeweils zwei parallel voneinander beabstandet angeordnete Abtriebsschenkel, nämlich jeweils die Abtriebsschenkel 4a und 4b, 5a und 5b, 6a und 6b bzw. 7a und 7b vorgesehen, die bei Bewegung von Widerlager 14 und Abtriebselement 13 eine parallelogrammartige Bewegung ausführen.

Durch die ersten Halteelemente 11, 12 und die zweiten Halteelemente 15,16 ist der Kraftübersetzungsrahmen 10 einerseits zuverlässig und sicher gegen die am Rotorblatt wirkende hohe Fliehkraft, die bis zu 1000 g betragen kann, fixiert, andererseits stehen dem Abtriebselement 13 und dem Widerlager 14 genügend Freiheitsgrade zur Verfügung, so daß diese beiden Elemente von der Fliehkraft wie auch von den Befestigungselementen 17, 18, 19 genügend entkoppelt sind, um ohne abträgliche Beeinflussung arbeiten zu können.

Bei dem in den Figuren 1 und 2 dargestellten Ausführungsbeispiel sind die ersten Halteelemente 11, 12 an ihren zur Befestigung am Rotorblatt vorgesehenen Enden einstückig mit Befestigungsösen 17,18 ausgebildet und die Arbeitsjoche 8,9, die Abtriebsschenkel 4a,b, 5a,b, 6a,b, 7a,b und die Abtriebsbereiche in Form von Widerlager 14 und Abtriebselement 13, welche zusammen den Kraftübersetzungsrahmen 10 bilden, sind einstückig ausgebildet zusammen mit den ersten Halteelementen 11,12 und den zweiten Halteelementen 15,16 einschließlich des zur Befestigung am Rotorblatt dienenden Befestigungselements 19.

### Bezugszeichenliste

- 1: piezoelektrische Betätigungseinrichtung
- 2: piezoelektrischer Stapelaktuator
- 3 4a,b: Abtriebsschenkel
- 5a,b: Abtriebsschenkel
- 6a,b: Abtriebsschenkel
- 7a,b: Abtriebsschenkel
- 8: Arbeitsjoch
- 9: Arbeitsjoch
- 10: Kraftübersetzungsrahmen
- 11: erstes Halteelement
- 12: erstes Halteelement
- 13: Abtriebselement
- 14: Widerlager
- 15: zweites Halteelement
- 16: zweites Halteelement
- 17: Befestigungsöse
- 18: Befestigungsöse
- 19: Befestigungselement

## Patentansprüche

1. Piezoelektrische Betätigungseinrichtung zur Klappensteuerung am Rotorblatt eines Hubschraubers mit einer mindestens einen piezoelektrischen Stapelaktuator (2) enthaltenden Piezoelementanordnung und einem mit der Piezoelementanordnung gekoppelten Kraftübersetzungsrahmen (10), der an einem Rotorblatt befestigbar ist und aus einer Längenänderung der Piezoelementanordnung bei deren Erregung zwischen einem Widerlager (14) und einem Abtriebselement (13), die an dem Kraftübersetzungsrahmen (10) vorgesehen sind, eine quer zur Fliehkraftrichtung des Rotorblatts wirkende Kraft erzeugt, wobei eine erste Halterung (11,12) vorgesehen ist, über die der Kraftübersetzungsrahmen (10) in Fliehkraftrichtung an dem Rotorblatt fixierbar ist, jedoch quer zur Fliehkraftrichtung nachgiebig ist und über einen begrenzten Bereich eine Bewegung des Kraftübersetzungsrahmens (10) quer zur Fliehkraftrichtung relativ zu dem Rotorblatt gestattet, sowie eine zweite Halterung (15, 16) vorgesehen ist, die das an dem Kraftübersetzungsrahmen (10) vorgesehene Widerlager (14) quer zur Fliehkraftrichtung relativ zu dem Rotorblatt festlegt, jedoch in Fliehkraftrichtung nachgiebig ist und über einen begrenzten Bereich eine Bewegung des Widerlagers (14) in Fliehkraftrichtung relativ zu dem Rotorblatt gestattet;
**dadurch gekennzeichnet, daß**
die erste Halterung (11,12) zwei Anordnungen von ersten biegeweichen Bändern enthält, die sich im wesentlichen parallel zueinander in Fliehkraftrichtung erstrecken,
und dass die zweite Halterung (15,16) zwei Anordnungen von zweiten biegeweichen Bändern enthält, die sich im wesentlichen parallel zueinander quer zur Fliehkraftrichtung erstrecken, so dass die biegeweichen Bänder der ersten Halterung (11,12) sowie der zweiten Halterung (15,16) parallelogrammförmig bewegbar sind.

2. Piezoelektrische Betätigungseinrichtung nach Anspruch 1, **dadurch gekennzeichnet, daß** die erste Halterung (11, 12) an einem Ende am Rotorblatt und am anderen Ende am Kraftübersetzungsrahmen (10) der Betätigungseinrichtung befestigbar ist.

3. Piezoelektrische Betätigungseinrichtung nach Anspruch 2, **dadurch gekennzeichnet, daß** die ersten Halterung (11, 12) kraftübersetzungsrahmenseitig am Widerlager (14) oder in der Nähe desselben bzw. am Abtriebselement (13) oder in der Nähe desselben befestigbar ist.

4. Piezoelektrische Betätigungseinrichtung nach einem der Ansprüche 1 bis 3, **dadurch gekennzeichnet, daß** die zweite Halterung (15,16) an einem Ende mit dem Widerlager (14) und am anderen Ende mit einem zur Befestigung am Rotorblatt dienenden Befestigungselement (19) fixierbar ist.

5. Piezoelektrische Betätigungseinrichtung nach einem der Ansprüche 1 bis 4, **dadurch gekennzeichnet, daß** die Piezoelementanordnung mindestens einen in seiner Arbeitsrichtung längsausgedehnten piezoelektrischen Stapelaktuator (2) enthält, und daß der Kraftübersetzungsrahmen (10) mit den jeweiligen Enden (A, B) der Piezoelementanordnung (2, 3) gekoppelte Arbeitsjoche (8, 9) und diese miteinander verbindende, sich ungefähr parallel zur Längsrichtung der Piezoelementanordnung (2) erstreckende und in einem Mittelbereich zwischen den Arbeitsjochen (8, 9) Abtriebsbereiche in Form des Widerlagers (14) und des Abtriebselements (13) aufweisende Abtriebsschenkel (4a) umfaßt, wobei die Abtriebsschenkel (4a, 4b, 5a, 5b, 6a, 6b, 7a, 7b) zusammen mit den Arbeitsjochen (8, 9) eine im Sinne einer Verschiebung der Abtriebsbereiche relativ zueinnder in Richtung senkrecht zur Längsrichtung der Piezoelementanordnung (2) flexible Anordnung bilden, durch welche ein Ausdehnen und Zusammenziehen der Piezoelementanordnung (2, 3) in ihrer Längsrichtung in eine Bewegung von Widerlager (14) und Abtriebselement (13) relativ zueinander in Richtung senkrecht zur Längsrichtung der Piezoelementanordnung (2) umgesetzt wird.

6. Piezoelektrische Betätigungseinrichtung nach Anspruch 5, **dadurch gekennzeichnet, daß** die Piezoelementanordnung (2) mit ihren Enden (A, B) jeweils mittig mit dem Zentrum eines jeden Arbeitsjochs (8, 9) gekoppelt ist und daß an jedem Arbeitsjoch (8, 9) paarweise bezüglich des Zentrums des jeweiligen Arbeitsjochs (8, 9) einander gegenüberliegende Abtriebsschenkel (4a, 4b, 5a, 5b, 6a, 6b, 7a, 7b) vorgesehen sind, die jeweils an einem Ende flexibel mit jeder Seite eines Arbeitsjochs (8, 9) verbunden sind und am anderen Ende zu den im Mittelbereich befindlichen Abtriebsbereichen in Form von Widerlager (14) bzw. Abtriebselement (13) verlaufen.

7. Piezoelektrische Betätigungseinrichtung nach Anspruch 5 oder 6, **dadurch gekennzeichnet, daß** die Abtriebsschenkel (4a, 4b, 5a, 5b, 6a, 6b, 7a, 7b) durch in sich starre Einzelschenkel gebildet sind, die im Mittelbereich und an den den Arbeitsjochen (8, 9) zugeordneten Enden gelenkig verbunden sind.

8. Piezoelektrische Betätigungseinrichtung nach Anspruch 7, **dadurch gekennzeichnet, daß** zwischen jeder Seite eines Arbeitsjochs (8, 9) und einem Abtriebsbereich in Form von Widerlager (14) bzw. Abtriebselement (13) jeweils zwei parallel voneinander beabstandet angeordnete Abtriebsschenkel (4a und 4b, 5a und 5b, 6a und 6b, 7a und 7b) vorgesehen sind, die bei Bewegung von Widerlager (14) und Abtriebselement (13) eine parallelogrammartige Bewegung ausführen.

9. Piezoelektrische Betätigungseinrichtung nach einem der Ansprüche 2 bis 8, **dadurch gekennzeichnet, daß** die erste Halterung (11, 12) an ihrem zur Befestigung am Rotorblatt vorgesehenen Ende einstückig mit der erste Halterung (11,12) ausgebildete Befestigungsösen (17, 18) aufweist.

10. Piezoelektrische Betätigungseinrichtung nach einem der Ansprüche 5 bis 9, **dadurch gekennzeichnet, daß** der die Arbeitsjoche (8, 9), die Abtriebsschenkel (4a, 4b, 5a, 5b, 6a, 6b, 7a, 7b) und die Abtriebsbereiche in Form von Widerlager (14) und Abtriebselement (13) umfassende Kraftübersetzungsrahmen (10) einstückig zusammen mit der ersten Halterung (11, 12) und der zweiten Halterung (15,16) einschließlich des zur Befestigung am Rotorblatt dienenden Befestigungselements (19) hergestellt ist.

11. Piezoelektrische Betätigungseinrichtung nach einem der Ansprüche 1 bis 10, **dadurch gekennzeichnet, daß** die Abtriebsschenkel (4a, 4b, 5a, 5b, 6a, 6b, 7a, 7b) durch ein dünnes, flexibles Bandmaterial gebildet sind, das in Richtung seiner Dicke eine geringe Biegesteifigkeit und in Querrichtung eine hohe Steifigkeit aufweist.

## Claims

1. Piezoelectric operating device for controlling the flaps on the rotor blade of a helicopter, having a piezo element arrangement containing at least one piezoelectric stack actuator (2) and having a power transmission frame (10) coupled to the piezo element arrangement, which power transmission frame is attachable to a rotor blade and, from a change in length of the piezo element arrangement upon excitation thereof, generates a force acting transversely to the centrifugal force of the rotor blade between an abutment (14) and a driven element (13) that are provided on the power transmission frame (10), a first holding device (11,12) being provided, by means of which the power transmission frame (10) is fixable on the rotor blade in the direction of the centrifugal force, but which is flexible transversely to the direction of the centrifugal force and allows the power transmission frame (10) to move transversely to the direction of the centrifugal force relative to the rotor blade over a limited range, and a second holding device (15, 16) being provided, which fixes the abutment (14) provided on the power transmission frame (10) transversely to the direction of the centrifugal force relative to the rotor blade, but is flexible in the direction of the centrifugal force and allows the abutment (14) to move in the direction of the centrifugal force relative to the rotor blade over a limited range,
**characterised in that**
the first holding device (11,12) contains two arrangements of first flexurally soft straps that extend substantially parallel to one another in the direction of the centrifugal force, and **in that** the second holding device (15, 16) contains two arrangements of second flexurally soft straps that extend substantially parallel to one another transversely to the direction of the centrifugal force, so that the flexurally soft straps of the first holding device (11,12) and of the second holding device (15, 16) are movable in the form of a parallelogram.

2. Piezoelectric operating device according to claim 1, **characterised in that** the first holding device (11,12) is attachable at one end to the rotor blade and at the other end to the power transmission frame (10) of the operating device.

3. Piezoelectric operating device according to claim 2, **characterised in that**, on the power transmission frame side, the first holding device (11, 12) is attachable to the abutment (14) or in the vicinity thereof and to the driven element (13) or in the vicinity thereof, respectively.

4. Piezoelectric operating device according to any one of claims 1 to 3, **characterised in that** the second holding device (15, 16) is fixable at one end to the abutment (14) and at the other end to a fixing element (19) serving for attachment to the rotor blade.

5. Piezoelectric operating device according to any one of claims 1 to 4, **characterised in that** the piezoelectric arrangement contains at least one piezoelectric stack actuator (2) extending longitudinally in its working direction, and **in that** the power transmission frame (10) comprises working yokes (8, 9) coupled with the respective ends (A, B) of the piezo element arrangement (2, 3) and driven legs (4a) connecting the working yokes and extending approximately parallel to the longitudinal direction of the piezo element arrangement (2) and having driven regions in the form of the abutment (14) and the driven element (13) in the middle region between the working yokes (8, 9), the driven legs (4a, 4b, 5a, 5b, 6a, 6b, 7a, 7b) together with the working yokes (8, 9) forming a flexible arrangement in terms of a displacement of the driven regions rotative to one another in a direction perpendicular to the longitudinal direction of the piezo element arrangement (2), which flexible arrangement converts an expansion and contraction of the piezo element arrangement (2, 3) in its longitudinal direction to a movement of the abutment (14) and driven element (13) relative to each other in a direction perpendicular to the longitudinal direction of the piezo element arrangement (2).

6. Piezoelectric operating device according to claim 5, **characterised in that** the piezo element arrangement (2) is coupled at the centre of its ends (A, B) to the centre of each working yoke (8, 9) respectively, and **in that** on each working yoke (8, 9) there are provided driven legs (4a, 4b, 5a, 5b, 6a, 6b, 7a, 7b) in pairs lying opposite each other with respect to the centre of the respective working yoke (8, 9), and flexibly connected at a respective end to each side of a working yoke (8, 9) and extending at the other end towards the driven regions in the form of abutment (14) and driven element (13), respectively, located in the central region.

7. Piezoelectric operating device according to claim 5 or 6, **characterised in that** the driven legs (4a, 4b, 5a, 5b, 6a, 6b, 7a, 7b) are formed by intrinsically rigid single legs that are hinged in the central region and at the ends associated with the working yokes (8, 9).

8. Piezoelectric operating device according to claim 7, **characterised in that** between each side of a working yoke (8, 9) and a driven region in the form of abutment (14) and driven element (13), respectively, there are provided in each case two driven legs (4a and 4b, 5a and 5b, 6a and 6b, 7a and 7b) arranged parallel and spaced apart from one another, which perform a parallelogram-type movement on movement of the abutment (14) and driven element (13).

9. Piezoelectric operating device according to any one of claims 2 to 8, **characterised in that** at its end intended for attachment to the rotor blade, the first holding device (11, 12) has fixing eyes (17,18) formed integrally with the first holding device (11, 12).

10. Piezoelectric operating device according to any one of claims 5 to 9, **characterised in that** the power transmission frame (10) comprising the working yokes (8, 9), the driven legs (4a, 4b, 5a, 5b, 6a, 6b, 7a, 7b) and the driven regions in the form of abutment (14) and driven element (13) is manufactured in one piece together with the first holding device (11, 12) and the second holding device (15, 16) including the fastening element (19) serving for attachment to the rotor blade.

11. Piezoelectric operating device according to any one of claims 1 to 10, **characterised in that** the driven legs (4a, 4b, 5a, 5b, 6a, 6b, 7a, 7b) are formed by a thin, flexible strap material, which has a low flexural rigidity in the direction of its thickness and a high rigidity in the transverse direction.

## Revendications

1. Dispositif d'actionnement piézo-électrique pour la commande des volets au niveau de l'ailette de rotor d'un hélicoptère, avec un dispositif d'éléments piézo-électriques comprenant au moins un actionneur piézo-électrique à couches empilées (2) et un cadre transmetteur de force (10) couplé au dispositif d'éléments piézo-électriques, ledit cadre pouvant être fixé sur une ailette de rotor, et à partir d'une modification de la longueur du dispositif d'éléments piézo-électriques après excitation de celui-ci, génère une force agissant perpendiculairement à la direction de la force centrifuge entre une butée (14) et un élément de sortie (13) prévus sur le cadre transmetteur de force (10), moyennant quoi un premier support (11, 12) est prévu grâce auquel le cadre transmetteur de force (10) peut être fixé sur l'ailette du rotor dans la direction de la force centrifuge, cependant reste élastique perpendiculairement à la direction de la force centrifuge et permet, sur une zone limitée, un mouvement du cadre transmetteur de force (10) perpendiculairement à la direction de la force centrifuge par rapport à l'ailette de rotor, et un second support (15, 16) est prévu, qui fixe la butée (14) prévue au niveau du cadre transmetteur de force (10) perpendiculairement à la direction de la force centrifuge par rapport à l'ailette de rotor, mais qui reste cependant élastique dans la direction de la force centrifuge et permet sur une zone limitée un mouvement de la butée (14) en direction de la force centrifuge par rapport à l'ailette de rotor, **caractérisé en ce que** le premier support (11, 12) comprend deux agencements de premiers élastiques flexibles qui s'étirent essentiellement parallèlement les uns aux autres dans la direction de la force centrifuge, et **en ce que** le second support (15, 16) comprend deux seconds agencements d'élastiques flexibles, qui s'étirent essentiellement parallèlement les uns aux autres perpendiculairement à la direction de la force centrifuge, de sorte que les élastiques flexibles du premier support (11, 12) ainsi que du second support (15, 16) puissent être déplacés en formant un parallélogramme.

2. Dispositif d'actionnement piézo-électrique selon la revendication 1, **caractérisé en ce que** le premier support (11, 12) peut être fixé au niveau de sa première extrémité à l'ailette de rotor, et au niveau de sa seconde extrémité, au cadre transmetteur de force (10) du dispositif d'actionnement.

3. Dispositif d'actionnement piézo-électrique selon la revendication 2, **caractérisé en ce que** le premier support (11, 12) du côté du cadre transmetteur de force peut être fixé à la butée (14) ou dans son voisinage et/ou à l'élément de sortie (13) ou dans son voisinage.

4. Dispositif d'actionnement piézo-électrique selon la revendication 1, **caractérisé en ce que** le second support (15, 16) peut être fixé au niveau de son extrémité à la butée (14) et au niveau de son autre extrémité à un élément de fixation (19) servant pour la fixation au niveau de l'ailette de rotor.

5. Dispositif d'actionnement piézo-électrique selon l'une quelconque des revendications 1 à 4, **caractérisé en ce que** le dispositif d'éléments piézo-électriques comprend au moins un actionneur piézo-électrique à couches multiples (2) s'étendant dans le sens de la longueur de sa direction d'actionnement, et **en ce que** le cadre transmetteur de force (10) comprend des plaques d'actionnement (8, 9) couplées aux extrémités respectives (A, B) du dispositif d'éléments piézo-électriques (2, 3) et des branches de sortie (4a) reliant les plaques les unes aux autres et s'étendant à peu près parallèlement à la direction longitudinale du dispositif d'éléments piézo-électriques (2) et présentant dans une zone médiane entre les plaques d'actionnement (8, 9) des zones de sortie sous la forme de la butée (14) et de l'élément de sortie (13), moyennant quoi les branches de sortie (4a, 4b, 5a, 5ab, 6a, ab, 7a, 7b) avec les plaques d'actionnement (8, 9) forment un dispositif flexible en vue du déplacement des zones de sortie les unes par rapport aux autres dans le sens vertical à la direction longitudinale du dispositif d'éléments piézo-électriques (2), grâce auxquels un étirement et une contraction du dispositif d'éléments piézo-électriques (2, 3) dans sa direction longitudinale est converti par ledit dispositif flexible en un mouvement de la butée (14) et de l'élément de sortie (13) l'un par rapport à l'autre dans le sens vertical à la direction longitudinale du dispositif d'éléments piézo-électriques (2).

6. Dispositif d'actionnement piézo-électrique selon la revendication 5, **caractérisé en ce que** le dispositif d'éléments piézo-électriques (2) est couplé par ses extrémités (A, B) au centre de chaque plaque d'actionnement (8, 9) et que des branches de sortie (4a, 4b, 5a, 5b, 6a, 6b, 7a, 7b) sont prévues en paires se faisant face par rapport au centre de chaque plaque d'actionnement (8, 9), chaque extrémité desdites branches étant chacune reliée de manière flexible à une extrémité vers laquelle les zones de sortie ayant la forme de butée (14) et/ou d'élément de sortie (13) se trouvant dans la zone médiane s'étendent.

7. Dispositif d'actionnement piézo-électrique selon les revendications 5 ou 6, **caractérisé en ce que** les branches de sortie (4a, 4b, 5a, 5b, 6a, 6b, 7a, 7b) sont formées par des branches isolées rigides, qui sont reliées de manière articulée dans la zone médiane au niveau des extrémités associées aux plaques d'actionnement (8, 9).

8. Dispositif d'actionnement piézo-électrique selon la revendication 7, **caractérisé en ce qu'**entre chaque côté d'une plaque d'actionnement (8, 9) et une zone de sortie ayant la forme de la butée (14) et/ou de l'élément de sortie (13), on prévoit deux branches de sortie (4a et 4b, 5a et 5b, 6a et 6b, 7a et 7b) disposées parallèlement l'une à l'autre et à distance l'une de l'autre et qui, lors du mouvement de la butée (14) et de l'élément de sortie (13), effectuent un mouvement en forme de parallélogramme.

9. Dispositif d'actionnement piézo-électrique selon l'une quelconque des revendications 2 à 8, **caractérisé en ce que** le premier support (11, 12) présente à son extrémité prévue pour la fixation au niveau de l'ailette de rotor des oeillets de fixation (17, 18) réalisés en un tenant avec le premier support (11, 12).

10. Dispositif d'actionnement piézo-électrique selon l'une quelconque des revendications 5 à 9, **caractérisé en ce que** le cadre transmetteur de force (10) comprenant les plaques d'actionnement (8, 9), les branches de sortie (4a, 4b, 5a, 5b, 6a, 6b, 7a, 7b) et les zones de sortie ayant la forme de butée (14) et de l'élément de sortie (13) est fabriqué en un tenant avec le premier support (11, 12) et le second support (15, 16), y compris l'élément de fixation (19) servant à la fixation au niveau de l'ailette de rotor.

11. Dispositif d'actionnement piézo-électrique selon les revendications 1 ou 10, **caractérisé en ce que** les branches de sortie (4a, 4b, 5a, 5b, 6a, 6b, 7a, 7b) sont formées par un matériau élastique flexible mince, qui présente dans le sens de son épaisseur une résistance à la flexion faible et dans le sens transversal une rigidité élevée.
